# EUROPEAN PATENT APPLICATION

(11) **EP 4 718 822 A1**
(43) Date of publication of application: **01.04.2026**
(21) Application number: 25205342.6
(22) Date of filing: 29.09.2025
(51) Int. Cl.: H04L 67/50, H04W 4/80, H04W 8/00, H04W 12/02, H04W 72/40

(54) **ADVERTISING PACKET TRANSMISSION METHOD AND SYSTEM, DEVICE, STORAGE MEDIUM, AND COMPUTER PROGRAM PRODUCT**

(30) Priority: 30.09.2024 CN 202411392282
(71) Applicant: Amlogic (Shanghai) Co., Ltd, Shanghai 201203 (CN)
(72) Inventor: XU, Yanchao, Shanghai (CN); YU, Ching Hwa, Shanghai (CN)
(74) Representative: Maiwald GmbH

(57) **Abstract**

Disclosed are an advertising packet transmission method and system, a device, a storage medium, and a computer program product. The method includes: performing an advertising behavior for multiple times, the advertising behavior being used for transmitting advertising packets, where transmission-related parameters of the advertising behavior are reset at a specific time interval. The present disclosure helps to improve privacy in transmission of advertising packets.

## Description

### TECHNICAL FIELD

Embodiments of the present disclosure relate to the technical field of advertising, and in particular relates to an advertising packet transmission method and system, a device, a storage medium, and a computer program product.

### BACKGROUND

In Bluetooth low energy audio (BLE audio), broadcast audio or Auracast audio is introduced to allow multiple devices to simultaneously monitor one broadcast sound source. For example, a group of people in a public place may wear headsets to listen to audio information together. An audio stream of broadcast audio is a broadcast isochronous stream, BIS for short, i.e., a broadcast-based isochronous audio stream. In a BIS, a device that transmits an isochronous audio stream does not know how many devices may be receiving audio. There is no connection or response, and no need to establish a connection link between the devices.

In the current BLE protocol, to prevent a device from being tracked by a third-party device, a privacy mechanism is to be introduced.

### SUMMARY

A problem to be solved by embodiments of the present disclosure is to provide an advertising packet transmission method and system, a device, a storage medium, and a computer program product, which help to improve privacy in transmission of advertising packets.

To solve the above problem, an embodiment of the present disclosure provides an advertising packet transmission method, including: performing an advertising behavior for multiple times, the advertising behavior being used for transmitting advertising packets, where transmission-related parameters of the advertising behavior are reset at a specific time interval.

Optionally, the resetting transmission-related parameters of the advertising behavior at a specific time interval includes: resetting one or more of transmission time parameters, channel selection parameters, and sequence numbers of the advertising packets of the advertising behavior at a specific time interval.

Optionally, the transmission time parameters include one or more of a time interval of the advertising behavior and an advertising starting time point.

Optionally, when the advertising behavior is applicable to advertising events, the time interval is an advertising interval, and the transmission method further includes: configuring a delay interval at the end of the advertising interval.

Optionally, when the advertising behavior is applicable to advertising events, the time interval is an advertising interval, and the transmission time parameters of the advertising behavior is reset at a specific time interval in the same advertising event sequence.

Optionally, the channel selection parameters include one or more of an advertising behavior counter and a used channel list.

Optionally, the advertising behavior is applicable to periodic advertising events; and a channel used by the advertising behavior is selected by using a channel selection Algorithm#2.

Optionally, the advertising packets are in the format of a Bluetooth low energy high data throughput packet; and the sequence numbers are configured at protocol data unit header fields of the advertising packets.

Optionally, the step of performing an advertising behavior for multiple times further includes: regenerating a resolvable private address of the advertising packet transmission method at a preset time interval; and using the preset time as the specific time, or separately setting the preset time and the specific time.

Optionally, the specific time is a fixed time or a random time.

Correspondingly, an embodiment of the present disclosure further provides an advertising packet transmission system, including: an advertising packet transmission circuit, configured to perform an advertising behavior for multiple times, the advertising behavior being used for transmitting advertising packets, and the advertising packet transmission circuit including a transmission-related parameter updating component, configured to reset transmission-related parameters of the advertising behavior at a specific time interval.

Optionally, the transmission-related parameter updating component is configured to reset one or more of transmission time parameters, channel selection parameters, and sequence numbers of the advertising packets of the advertising behavior at a specific time interval.

Optionally, the transmission time parameters include one or more of a time interval of the advertising behavior and an advertising starting time point.

Optionally, the channel selection parameters include one or more of an advertising behavior counter and a used channel list.

Optionally, the advertising packets are in the format of a Bluetooth low energy high data throughput packet; and the sequence numbers are configured at protocol data unit header fields of the advertising packets.

Correspondingly, an embodiment of the present disclosure further provides a device, including at least one memory and at least one processor, the memory having one or more computer instructions stored therein, and the one or more computer instructions being executed by the processor to implement the advertising packet transmission method according to the embodiment of the present disclosure.

Correspondingly, an embodiment of the present disclosure further provides a storage medium, having one or more computer instructions stored therein, the one or more computer instructions being used for implementing the advertising packet transmission method according to the embodiment of the present disclosure.

Correspondingly, an embodiment of the present disclosure further provides a computer program product, including a computer program/instruction, the computer program/instruction implementing the advertising packet transmission method according to the embodiment of the present disclosure when executed by a processor.

Compared with the related art, technical solutions of the embodiments of the present disclosure have the following advantages:
In the advertising packet transmission method according to the embodiment of the present disclosure, an advertising behavior is performed for multiple times, the advertising behavior being used for transmitting advertising packets, where transmission-related parameters of the advertising behavior are reset at a specific time interval. In the embodiments of the present disclosure, the transmission-related parameters of the advertising behavior are reset at a specific time interval, which helps to break the rule under which the advertising behavior is performed for multiple times, and correspondingly break the rule under which multiple advertising packets are transmitted, thereby helping to reduce the probability of the advertising packets being tracked by a third-party device during transmission, and further helping to improve privacy in transmission of the advertising packets.

### BRIEF DESCRIPTION OF THE DRAWINGS

FIG. 1 is a flowchart of an embodiment of an advertising packet transmission method according to the present disclosure;
FIG. 2 to FIG. 10 are schematic diagrams corresponding to steps in the embodiment of the advertising packet transmission method according to the present disclosure;
FIG. 11 is a functional block diagram of an embodiment of an advertising packet transmission system according to the present disclosure; and
FIG. 12 is a structural diagram of hardware of an embodiment of a device according to the present disclosure.

### DETAILED DESCRIPTION

It can be known from the background that in a current BLE protocol, to prevent a device from being tracked by a third-party device, a privacy protection transmission method is urgently needed.

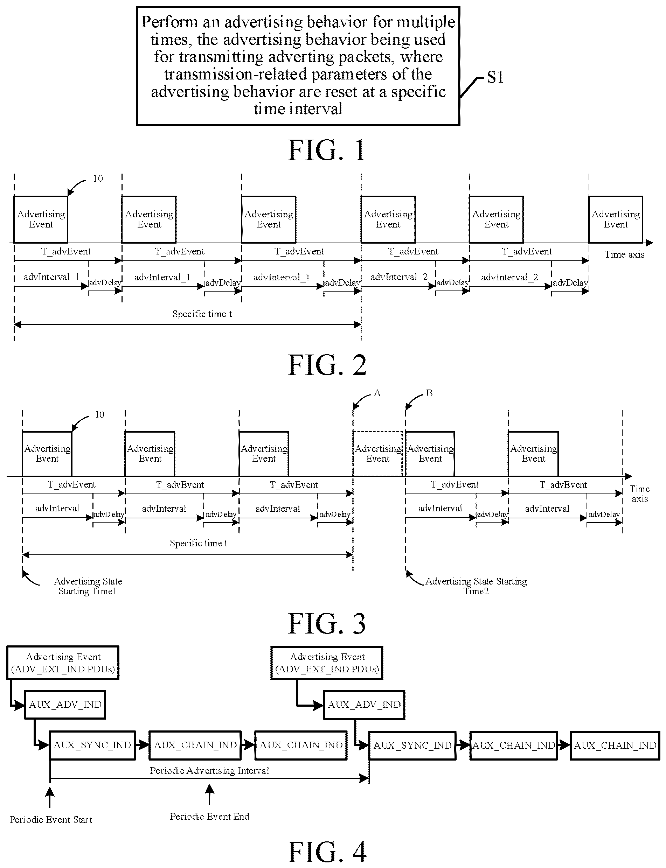

To solve the above technical problem, an embodiment of the present disclosure provides an advertising packet transmission method. FIG. 1 is a flowchart of an embodiment of an advertising packet transmission method according to the present disclosure.

In this embodiment, the advertising packet transmission method includes the following basic steps:
S1: An advertising behavior is performed for multiple times, the advertising behavior being used for transmitting advertising packets, where transmission-related parameters of the advertising behavior are reset at a specific time interval.

In the embodiments of the present disclosure, the transmission-related parameters of the advertising behavior are reset at a specific time interval, which helps to break the rule under which the advertising behavior is performed for multiple times, and correspondingly break the rule under which multiple advertising packets are transmitted, thereby helping to reduce the probability of the advertising packets being tracked by a third-party device during transmission, and further helping to improve privacy in transmission of the advertising packets.

To make the above objectives, features, and advantages of the embodiments of the present disclosure more apparent and easier to understand, specific embodiments of the present disclosure are described in detail below with reference to the accompanying drawings.

FIG. 2 to FIG. 10 are schematic diagrams corresponding to steps in an embodiment of an advertising packet transmission method according to the present disclosure.

In this embodiment, the advertising packet transmission method is applicable to BLE advertisement, and the BLE advertisement is short for Bluetooth low energy advertisement.

In the BLE advertisement, multiple devices are allowed to simultaneously monitor an advertisement sound source. For example, a group of people in a public place may wear headsets to listen to audio information together.

With reference to FIG. 1 to FIG. 10, S1 is performed: An advertising behavior 10 is performed for multiple times, the advertising behavior 10 being used for transmitting advertising packets, where transmission-related parameters of the advertising behavior 10 are reset at a specific time interval t.

The advertising packets are data packets that are transmitted, and the advertising behavior 10 is performed for multiple times to advertise data information.

It should be noted that, in the advertising behavior 10, a corresponding advertising packet is transmitted according to actual requirements. Namely, in the advertising behavior 10, an advertising packet may be carried or not carried for transmission.

In this embodiment, the advertising behavior 10 includes advertising events or periodic advertising events.

Specifically, in this embodiment, the advertising packets are transmitted from a link layer (LL) to a physical layer (PHY) for encoding and transmission.

In this embodiment, the transmission-related parameters of the advertising behavior 10 are reset at a specific time interval t, which helps to break the rule under which the advertising behavior 10 is performed for multiple times, and correspondingly break the rule under which multiple advertising packets are transmitted, thereby helping to reduce the probability of the advertising packets being tracked by a third-party device during transmission, and further helping to improve privacy in transmission of the advertising packets.

In this embodiment, the step of performing an advertising behavior 10 for multiple times further includes: a resolvable private address of the advertising packet transmission method is regenerated at a preset time interval.

Specifically, during BLE advertisement, a random address is used to hide the real address of a device. A random address is generated by encrypting a real device address by using a key. The encrypted address can be decrypted and confirmed only after a peer end finishes pairing and binding and the two parties synchronize key information, so as to ensure that a device does not use a fixed unique address, and the address is not easily tracked by a third-party device. The above address is a resolvable private address in the BLE protocol.

In addition, to prevent a BLE device from using the same resolvable private address for a long time, the BLE protocol also stipulates that the resolvable private address is to be regenerated at a preset time interval, so as to be less easily tracked by a third-party device, and improve privacy of advertising.

In this embodiment, the preset time may be a fixed time, or may be a random time. As an example, in this embodiment, the preset time is a random time. Namely, the generated preset time is random, i.e., random RPA update, to prevent a fixed interval (fixed period) at which the resolvable private address is generated from being tracked by a third-party device, thereby helping to improve privacy in transmission of advertising packets.

In this embodiment, the preset time is used as the specific time t. Namely, the update time of the transmission-related parameters of the advertising behavior 10 in this embodiment may be synchronized with the update time of the resolvable private address, i.e., a preset time generation mechanism of the resolvable private address is used, and update of the transmission-related parameters is triggered at the update time point of the resolvable private address. Or, the preset time and the specific time t are separately set. Namely, the update time of the transmission-related parameters of the advertising behavior 10 in this embodiment is not synchronous with the update time of the resolvable private address. A generation mechanism of the specific time t is independent of a generation mechanism of the preset time, and update of the transmission-related parameters and update of the resolvable private address are separately triggered at different time points.

In this embodiment, the resetting the transmission-related parameters of the advertising behavior 10 includes: one or more of transmission time parameters, channel selection parameters, and sequence numbers of the advertising packets of the advertising behavior 10 are reset at a specific time interval.

The following describes a first embodiment of the resetting the transmission-related parameters of the advertising behavior 10 in detail.

In this embodiment, the resetting the transmission-related parameters of the advertising behavior 10 at a specific time interval t includes: transmission time parameters of the advertising behavior 10 are reset at a specific time interval t.

In this embodiment, the transmission time parameters include one or more of a time interval of the advertising behavior 10 and an advertising starting time point.

In this embodiment, the performing the advertising behavior 10 for multiple times includes: the time interval between two consecutive advertising behaviors 10 is set.

The time interval between two consecutive advertising behaviors 10 is defined, and the time interval determines a frequency at which a device advertisements, i.e., a time interval at which the device transmits a advertising message.

Correspondingly, in this embodiment, the advertising behavior 10 is continuously performed for multiple times according to the time interval.

In this embodiment, the resetting the transmission time parameters of the advertising behavior 10 at a specific time interval t includes: the time interval at which two consecutive advertising behaviors 10 are transmitted is regenerated at a specific time interval t.

The time interval at which two consecutive advertising behaviors 10 are transmitted is regenerated at a specific time interval t, so that in different time periods, a time interval in the sequence of the advertising behaviors 10 no longer has certain periodicity. Consequently, it is difficult for a third-party device to decrypt an advertisement device from the time interval, which helps to improve privacy in transmission of the advertising behaviors 10.

As an example, the following is a case in which the advertising behavior 10 is applicable to advertising events.

An advertising event usually periodically occurs, i.e., an advertisement device repeatedly transmits an advertising behavior 10 at a certain time interval, so as to be detected and connected or scanned by other devices.

Referring to FIG. 2, in this embodiment, the setting the time interval (T_advEvent in FIG. 2) between two consecutive advertising behaviors 10 includes: an advertising interval (Adv Interval) is set.

During each advertising event, a BLE device performs an advertising behavior 10 on a specified channel. Typically, an advertising interval is set to a fixed value.

In this embodiment, the regenerating, at a specific time interval t, the time interval at which two consecutive advertising behaviors 10 are performed includes: the advertising interval is regenerated at a specific time interval t.

The advertising interval is regenerated at a specific time interval t, then the advertising interval set in a specific time t is a fixed value, and the advertising interval set in the next specific time t is another fixed value, so that in different time periods, the advertising intervals no longer have certain periodicity, i.e., the time interval no longer has certain periodicity.

As shown in FIG. 2, in the previous specific time t, the advertising interval is advInterval_1. The advertising interval is regenerated at a specific time t. Therefore, in the next specific time t, the advertising interval is advInterval_2.

In this embodiment, the transmission method further includes: a delay interval (advDelay) is configured at the end of the advertising interval.

The delay interval is used for introducing a time delay between two consecutive advertising events, to combat interference and ensure that the advertising events can be performed more stably when surrounding channels have relatively strong interference.

Specifically, in this embodiment, the time interval between two consecutive advertising events is determined by both the advertising interval and the delay interval, i.e., T_advEvent = (advInterval + advDelay).

In this embodiment, in step of performing an advertising behavior 10 for multiple times, the delay intervals between consecutive advertising events are all randomly generated.

The delay interval is a pseudo-random number generated by the link layer (LL). When an advertisement device prepares to initiate the next advertising event, the advertisement device waits for a random time specified by the delay interval, which helps to reduce the probability that different advertisement devices using the same channel in the same time cause conflict of air interface packets.

In this embodiment, the transmission time parameters of the advertising behavior 10 is reset at a specific time interval t in the same advertising event sequence.

In the same advertising event sequence, the transmission time parameters typically have certain periodicity. Therefore, in the same advertising event sequence, the transmission time parameters of the advertising behavior 10 are reset at a specific time interval t, which breaks periodicity of the transmission time of the advertising behavior 10. Consequently, it is difficult for a third-party device to decrypt an advertisement device from the transmission time, which helps to improve privacy in transmission of advertising packets.

As another example, the following is a case in which the advertising behavior 10 is applicable to periodic advertising events.

A periodic advertising event is used to perform an advertising behavior 10 at a fixed time interval, and an advertising packet typically includes periodic data, such as sensor readings and status updates, to be received and processed by other devices.

As shown in FIG. 4, one periodic advertising event has one or more advertising sub-events (as shown by Advertising Event in FIG. 4). Extended advertising indication protocol data units (ADV_EXT_IND PDUs) are used for transmission on a primary advertising channel, and point to an auxiliary advertising indication (AUX_ADV_IND) transmitted on a secondary advertising channel. The auxiliary advertising indication is used for relieving congestion of an advertising channel and increasing flexibility of advertising, and points to an auxiliary synchronization indication (AUX_SYVC_IND). The auxiliary synchronization indication is used for synchronization indication of periodic advertising, and allows an advertisement device to transmit advertisement data to multiple devices at a fixed interval. An auxiliary chain advertising indication (AUX_CHAIN_IND) is used for chain-transmission of additional advertisement data. An interval between start locations of auxiliary synchronization indications of neighboring periods is the fixed time interval of the periodic advertising event.

In this embodiment, the setting the time interval at which two consecutive advertising behaviors 10 are performed includes: a periodic advertising interval is set.

The periodic advertising interval is fixed in a set period of time.

In this embodiment, the regenerating, at a specific time interval t, the time interval at which two consecutive advertising behaviors 10 are performed includes: a periodic advertising interval is regenerated at a specific time interval t.

The periodic advertising interval is regenerated at a specific time interval t, which breaks periodicity of the periodic advertising intervals. Consequently, it is difficult for a third-party device to decrypt an advertisement device from the periodic advertising interval, which helps to improve privacy in transmission of advertising packets.

The following describes a second embodiment of the resetting the transmission-related parameters of the advertising behavior 10 in detail.

In this embodiment, the performing the advertising behavior 10 for multiple times further includes: an advertising starting time point of multiple advertising behaviors 10 is set.

The advertising starting time point of the multiple advertising behaviors 10 is a transmission starting time of the multiple advertising behaviors 10.

Correspondingly, in this embodiment, the multiple advertising behaviors 10 start to be transmitted at the advertising starting time point.

In this embodiment, the resetting the transmission time parameters of the advertising behavior 10 at a specific time interval t includes: the advertising starting time point is regenerated at a specific time interval t.

The advertising starting time point is regenerated at a specific time interval t, which breaks periodicity of the multiple advertising behaviors 10. A time interval between an advertising behavior 10 starting to be transmitted at a regenerated advertising starting time point and the previous advertising behavior 10 does not follow a rule followed by the time interval of the previous multiple advertising behaviors 10. Therefore, in different time periods, the time intervals between consecutive advertising behaviors 10 no longer have certain periodicity. Consequently, it is difficult for a third-party device to decrypt an advertisement device from the time interval, which helps to improve privacy in transmission of advertising packets.

In this embodiment, the advertising behavior 10 is applicable to advertising events, and the advertising behavior 10 may also be applicable to periodic advertising events.

As an example, the following is a case in which the advertising behavior 10 is applicable to advertising events.

In this embodiment, the setting the advertising starting time point of multiple advertising behaviors 10 includes: an advertising event starting time point of multiple advertising events is set.

In this embodiment, the regenerating the advertising starting time point at a specific time interval t includes: an advertising event starting time point is regenerated at a specific time interval.

As shown in FIG. 3, in the previous specific time t, the advertising event starting time point of multiple advertising behaviors 10 is Advertising State Starting Time1. After the specific time interval t, the advertising event starting time point is regenerated as Advertising State Starting Time2. Namely, after the specific time interval t, the time point at which the first advertising event occurs is changed from a point A to a point B. It can be seen that, at this time, the time interval between the consecutive advertising events breaks the rule of the previous time interval, so that in different time periods, the advertising intervals no longer have certain periodicity.

As another example, the following is a case in which the advertising behavior 10 is applicable to periodic advertising events.

In this embodiment, the setting the advertising starting time point of multiple advertising behaviors 10 includes: a periodic advertising event starting time point of multiple periodic advertising events is set.

In this embodiment, the regenerating the advertising starting time point at a specific time interval t includes: a periodic advertising event starting time point is regenerated at a specific time interval t.

The periodic advertising event starting time point is regenerated at a specific time interval t, which breaks the rule of a fixed periodic advertising interval. In this way, in different time periods, the periodic advertising intervals no longer have certain periodicity. Consequently, it is difficult for a third-party device to decrypt an advertisement device from the periodic advertising interval, which helps to improve privacy in transmission of advertising packets.

The following describes a third embodiment of the resetting the transmission-related parameters of the advertising behavior 10 in detail.

In this embodiment, before performing the advertising behavior 10 each time, the step of performing an advertising behavior 10 for multiple times further includes: a channel used by the advertising behavior 10 is selected.

A channel is an information channel for advertising and transmitting information, and each advertising behavior 10 may select a corresponding channel for information transmission.

As an example, in this embodiment, the advertising behavior 10 is applicable to periodic advertising events. A channel used by the advertising behavior 10 is selected by using a channel selection Algorithm#2.

In this embodiment, before the transmitting one or continuously transmitting multiple advertising behaviors 10 in a specific time t, the method further includes: a used channel list is generated.

A used channel list is a set of available channels, from which a used channel is selected by the advertising behavior 10, to avoid channel conflict and interference.

In this embodiment, the selecting a channel used by the advertising behavior 10 includes: an advertising behavior counter is obtained, where the advertising behavior counters of multiple consecutive advertising behaviors 10 increase progressively.

An advertising behavior counter represents counting of an advertising behavior 10, and the advertising behavior counters of multiple consecutive advertising behaviors 10 increase progressively, so that the multiple advertising behaviors 10 select different channels.

In this embodiment, a channel is selected according to the advertising behavior counter.

Specifically, in this embodiment, in the step of selecting a channel used by the advertising behavior 10, a channel is selected from a used channel list.

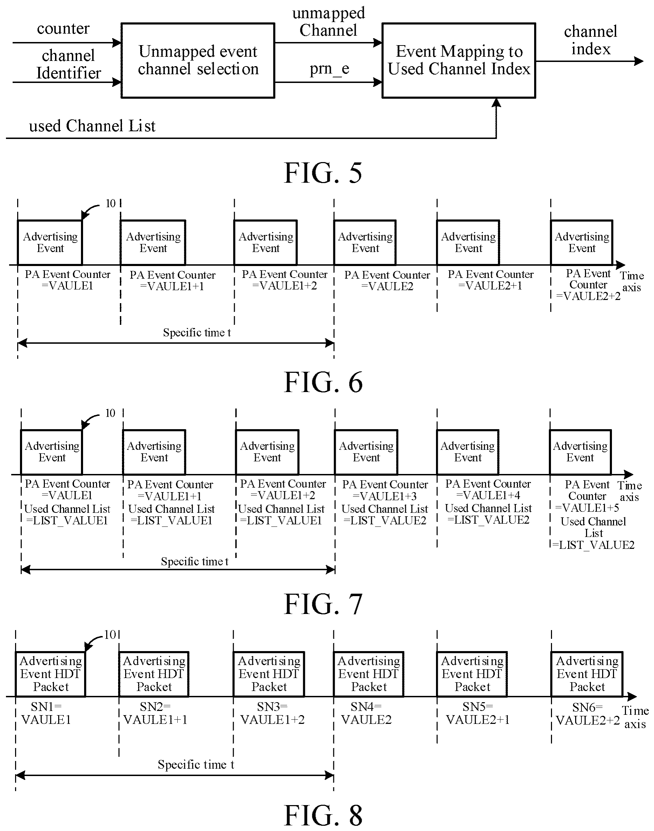

As shown in FIG. 5, an advertising behavior counter, a channel identifier, and a used channel list are input parameters. In a periodic advertising event (PA Event), a channel identifier is generated by an access address of the periodic advertising event, and is a known predicted value. The advertising behavior counter is the periodic advertising event counter. The used channel list is a list of all available channels in one or more future periodic advertising events. The advertising behavior counter and the channel identifier are inputted, and intermediate temporary variables unmapped Channel and prn_e are obtained by unmapped event channel selection. The intermediate temporary variables and the used channel list are inputted into event mapping to used channel index, and a channel index is outputted to be used as a channel used by the specific advertising behavior 10.

In this embodiment, the updating the transmission-related parameters of the advertising behavior 10 at a specific time interval t includes: channel selection parameters of the advertising behavior 10 are reset at a specific time interval t.

The channel selection parameters of the advertising behavior 10 are reset at a specific time interval t, which breaks the rule of channel selection of multiple consecutive advertising behaviors 10. Consequently, it is difficult for a third-party device to decrypt an advertisement device by tracking a channel, which helps to improve privacy in transmission of advertising packets.

In this embodiment, the channel selection parameters include one or more of an advertising behavior counter and a used channel list.

In this embodiment, the resetting the channel selection parameters of the advertising behavior 10 at a specific time interval t includes: an advertising behavior counter is regenerated at a specific time interval t.

The advertising behavior counter is regenerated at a specific time interval t, which breaks the rule under which the advertising behavior counters of multiple consecutive advertising behaviors 10 increase progressively, and further breaks the rule of channel selection of the multiple consecutive advertising behaviors 10. Consequently, it is difficult for a third-party device to decrypt an advertisement device by tracking a channel, which helps to improve privacy in transmission of advertising packets.

Specifically, in this embodiment, the obtaining the advertising behavior counter includes: an advertising behavior counter of the previous advertising behavior 10 plus 1 is obtained, and used as the advertising behavior counter of the current advertising behavior 10, where in a specific time t, the advertising behavior counter of the first advertising behavior 10 is a specified initial value.

The advertising behavior counter of the first advertising behavior 10 is set as the specified initial value, and in each subsequent advertising behavior 10, the advertising behavior counter of the previous advertising behavior 10 plus 1 is obtained and used as the advertising behavior counter of the current advertising behavior 10, to obtain advertising behavior counters that increase progressively.

Correspondingly, in this embodiment, the regenerating the advertising behavior counter at a specific time interval t includes: the specified initial value is regenerated at a specific time interval t.

The specified initial value is regenerated at a specific time interval t, which breaks the rule under which the advertising behavior counters of multiple consecutive advertising behaviors 10 increase progressively, and further breaks the rule of channel selection of the multiple consecutive advertising behaviors 10. Consequently, it is difficult for a third-party device to decrypt an advertisement device by tracking a channel, which helps to improve privacy in transmission of advertising packets.

As shown in FIG. 6, in the previous specific time t, a specified initial value VAULE1 is generated as the advertising behavior counter of the first advertising behavior 10, and the advertising behavior counter of each subsequent advertising behavior 10 is progressively +1. After the specific time interval t, a specified initial value VAULE2 is regenerated as the advertising behavior counter of the first advertising behavior 10 in the next specific time t, and the advertising behavior counter of each subsequent advertising behavior 10 is progressively +1. It can be seen that the rule under which the advertising behavior counters of multiple consecutive advertising behaviors 10 increase progressively is broken, and further the rule of channel selection of the multiple consecutive advertising behaviors 10 is broken. Consequently, it is difficult for a third-party device to decrypt an advertisement device by tracking a channel, which helps to improve privacy in transmission of advertising packets.

Specifically, in this embodiment, the specified initial value is randomly regenerated at a specific time interval t.

The following describes a fourth embodiment of the resetting the transmission-related parameters of the advertising behavior 10 in detail.

In this embodiment, the resetting the channel selection parameters of the advertising behavior 10 at a specific time interval t includes: a used channel list is regenerated at a specific time interval t.

A channel is selected from the used channel list, and then the used channel list is regenerated, i.e., a channel is selected from different used channel lists, which breaks the rule of channel selection of multiple consecutive advertising behaviors 10. Consequently, it is difficult for a third-party device to decrypt an advertisement device by tracking a channel, which helps to improve privacy in transmission of advertising packets.

As shown in FIG. 7, in the previous specific time t, a used channel list for channel selection for each advertising behavior 10 is LIST_VAULE1. After the specific time interval t, the used channel list is regenerated. In the next specific time t, a used channel list for channel selection for each advertising behavior 10 is LIST_VAULE2. Therefore, the rule under which the advertising behavior counters of multiple consecutive advertising behaviors 10 increase progressively is broken, and further the rule of channel selection of the multiple consecutive advertising behaviors 10 is broken. Consequently, it is difficult for a third-party device to decrypt an advertisement device by tracking a channel, which helps to improve privacy in transmission of advertising packets.

The following describes a fifth embodiment of the resetting the transmission-related parameters of the advertising behavior 10 in detail.

In this embodiment, in the step of continuously transmitting multiple advertising behaviors 10, progressively increasing sequence numbers (SN) are sequentially configured for advertising packets according to a transmission sequence.

A sequence number is used for identifying the sequence of an advertising packet transmitted. During data transmission of the BLE, each advertising packet is assigned a unique sequence number, to ensure that a receiving party can recombine these advertising packets in a correct sequence.

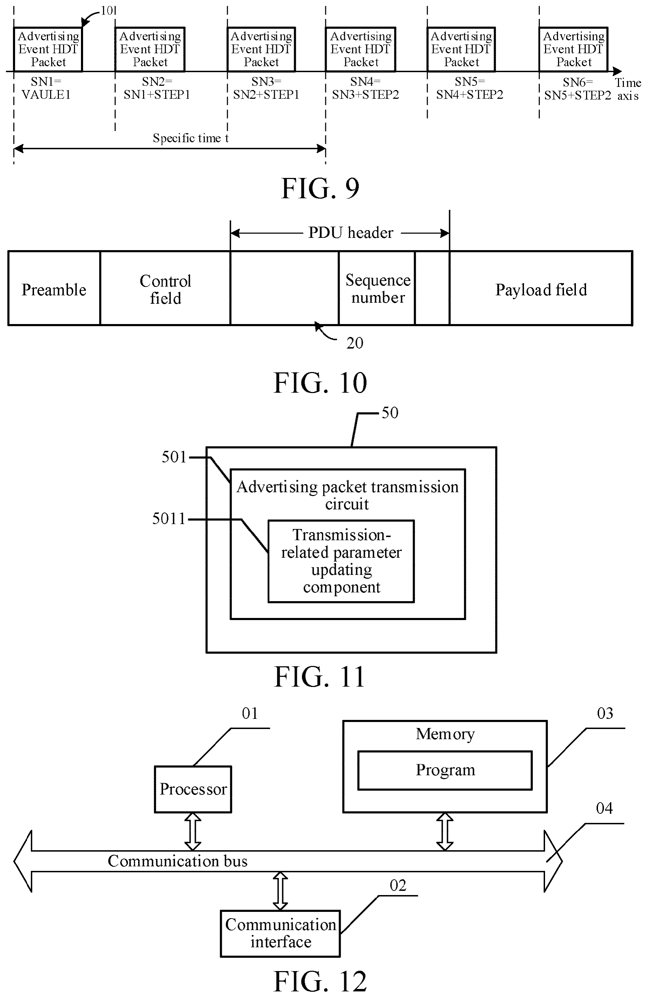

Referring to FIG. 10, in this embodiment, an advertising packet is in the format of a BLE high data throughput (BLE HDT) packet.

A BLE HDT packet sequentially includes a preamble, a control field, a PDU header field, and a payload field.

In this embodiment, a sequence number is configured in a PDU header field 20 of an advertising packet.

In this embodiment, the sequentially configuring progressively increasing sequence numbers for the advertising packets according to a transmission sequence includes: the sequence number of the previous advertising packet plus an interval value is obtained and used as the sequence number of the current advertising packet.

The sequence number of the previous advertising packet plus an interval value is obtained and used as the sequence number of the current advertising packet, to represent the sequence of multiple advertising packets.

In this embodiment, the resetting the transmission-related parameters of the advertising packets at a specific time interval t includes: the sequence numbers are reset at a specific time interval t.

The sequence numbers are reset at a specific time interval t, which breaks the rule of progressive increasing of the sequence numbers of multiple advertising packets. Consequently, it is difficult for a third-party device to decrypt an advertisement device via the sequence number, which helps to improve privacy in transmission of the advertising packets.

In this embodiment, the resetting the sequence numbers at a specific time interval t includes: the sequence numbers are regenerated at a specific time interval t.

The sequence number being regenerated at a specific time interval t means that, at a specific time interval t, the sequence number of an advertising packet to be transmitted is not obtained by adding an interval value to the sequence number of the previous advertising packet, but a new sequence number is generated.

The sequence numbers are regenerated at a specific time interval t, which breaks the rule of progressive increasing of the sequence numbers of multiple advertising packets. Consequently, it is difficult for a third-party device to decrypt an advertisement device via the sequence number, which helps to improve privacy in transmission of the advertising packets.

In this embodiment, the sequence numbers are randomly regenerated at a specific time interval t.

As an example, in this embodiment, the interval value is 1.

As shown in FIG. 8, in the previous specific time t, the sequence numbers of the advertising packets of multiple advertising behaviors 10 are SN1=VAULE1, SN2=VAULE1+1, and SN3=VAULE1+2 sequentially. A sequence number VAULE2 is regenerated after a specific time interval t. In the next specific time t, the sequence numbers of the advertising packets of multiple advertising behaviors 10 are SN4=VAULE2, SN5=VAULE2+1, and SN6=VAULE2+2 sequentially, which breaks the rule of progressive increasing of the sequence numbers of multiple advertising packets.

The following describes a sixth embodiment of the resetting the transmission-related parameters of the advertising behavior 10 in detail.

In this embodiment, the resetting the sequence numbers at a specific time interval t includes: the interval value is regenerated at a specific time interval t.

The interval value is regenerated at a specific time interval t, which breaks the rule of progressive increasing of the sequence numbers of multiple advertising packets. Consequently, it is difficult for a third-party device to decrypt an advertisement device via the sequence number, which helps to improve privacy in transmission of the advertising packets.

In this embodiment, the interval value is regenerated randomly at a specific time interval t.

As shown in FIG. 9, in the previous specific time t, the interval value is STEP1, and the sequence numbers of the advertising packets of multiple advertising behaviors 10 are SN1=VAULE1, SN2=SN1+STEP1, and SN3=SN2+STEP1 sequentially. After the specific time interval t, the interval value is regenerated as STEP2. In the next specific time t, the sequence numbers of the advertising packets of multiple advertising behaviors 10 are SN4=SN3+STEP2, SN5=SN4+STEP2, and SN6=SN5+STEP2 sequentially, which breaks the rule of progressive increasing of the sequence numbers of multiple advertising packets.

It should be noted that, during advertising, the foregoing six embodiments may be independently used for privacy protection, or any multiple embodiments may be combined with each other for privacy protection.

In this embodiment, the advertising behavior 10 is performed for multiple times, where in the step of the resetting the transmission-related parameters of the advertising behavior 10 at a specific time interval t, the specific time t is a fixed time or a random time.

Specifically, a time maintenance mechanism is set in the advertisement device. The time maintenance mechanism may generate a fixed time and/or a random time as a time interval. Any one or more of the foregoing six embodiments may be triggered at the time interval. In addition, the time maintenance mechanism may use the same time maintenance mechanism as the foregoing resolvable private address.

Correspondingly, the present disclosure further provides an advertising packet transmission system. FIG. 11 is a functional block diagram of an embodiment of an advertising packet transmission system according to the present disclosure.

In this embodiment, an advertising packet transmission system 50 includes: an advertising packet transmission circuit 501, configured to perform an advertising behavior for multiple times. The advertising behavior is used for transmitting multiple advertising packets, and the advertising packet transmission circuit 501 includes a transmission-related parameter updating component 5011, configured to reset transmission-related parameters of the advertising behavior at a specific time interval.

In this embodiment, the advertising packet transmission method is applicable to BLE advertisement, and the BLE advertisement is short for Bluetooth low energy advertisement.

In the BLE advertisement, multiple devices are allowed to simultaneously monitor an advertisement sound source. For example, a group of people in a public place may wear headsets to listen to audio information together.

The advertising packet transmission circuit 501 is configured to perform the advertising behavior for multiple times. The advertising behavior is used for transmitting advertising packets, and the advertising packet transmission circuit 501 includes a transmission-related parameter updating component 5011, configured to reset transmission-related parameters of the advertising behavior at a specific time interval.

The advertising packets are data packets that are transmitted, and an advertising behavior is performed for multiple times to advertise data information.

It should be noted that, in the advertising behavior, a corresponding advertising packet is transmitted according to actual requirements. Namely, in the advertising behavior, an advertising packet may be carried or not carried for transmission.

In this embodiment, the advertising behavior includes advertising events or periodic advertising events.

Specifically, in this embodiment, the advertising packets are transmitted from a link layer (LL) to a physical layer (PHY) for encoding and transmission.

In this embodiment, the transmission-related parameters of the advertising behavior are reset at a specific time interval, which helps to break the rule under which the advertising behavior is performed for multiple times, and correspondingly break the rule under which multiple advertising behaviors are transmitted, thereby helping to reduce the probability of the advertising packets being tracked by a third-party device during transmission, and further helping to improve privacy in transmission of the advertising packets.

In this embodiment, the step of performing an advertising behavior for multiple times further includes: a resolvable private address of the advertising packet transmission method is regenerated at a preset time interval.

Specifically, during BLE advertisement, a random address is used to hide the real address of a device. A random address is generated by encrypting a real device address by using a key. The encrypted address can be decrypted and confirmed only after a peer end finishes pairing and binding and the two parties synchronize key information, so as to ensure that a device does not use a fixed unique address, and the address is not easily tracked by a third-party device. The above address is a resolvable private address in the BLE protocol.

In addition, to prevent a BLE device from using the same resolvable private address for a long time, the BLE protocol also stipulates that the resolvable private address is to be regenerated at a preset time interval, so as to be less easily tracked by a third-party device, and improve privacy of advertising.

In this embodiment, the preset time may be a fixed time, or may be a random time. As an example, in this embodiment, the preset time is a random time. Namely, the generated preset time is random, i.e., random RPA update, to prevent a fixed interval (fixed period) at which the resolvable private address is generated from being tracked by a third-party device, thereby helping to improve privacy in transmission of advertising packets.

In this embodiment, the preset time is used as the specific time. Namely, the update time of the transmission-related parameters of the advertising behavior in this embodiment may be synchronized with the update time of the resolvable private address, i.e., a preset time generation mechanism of the resolvable private address is used, and update of the transmission-related parameters is triggered at the update time point of the resolvable private address. Or, the preset time and the specific time are separately set. Namely, the update time of the transmission-related parameters of the advertising behavior in this embodiment is not synchronous with the update time of the resolvable private address. A generation mechanism of the specific time is independent of a generation mechanism of the preset time, and update of the transmission-related parameters and update of the resolvable private address are separately triggered at different time points.

In this embodiment, the resetting the transmission-related parameters of the advertising behavior includes: one or more of transmission time parameters, channel selection parameters, and sequence numbers of the advertising packets of the advertising behavior are reset at a specific time interval.

The following describes a first embodiment of resetting the transmission-related parameters of the advertising behavior in detail.

In this embodiment, the resetting transmission-related parameters of the advertising behavior at a specific time interval includes: transmission time parameters of the advertising behavior are reset at a specific time interval.

In this embodiment, the transmission time parameters include one or more of a time interval of the advertising behavior and an advertising starting time point.

In this embodiment, the performing the advertising behavior for multiple times includes: the time interval between two consecutive advertising behaviors is set.

The time interval between two consecutive advertising behaviors is defined, and the time interval determines a frequency at which a device advertises, i.e., a time interval at which the device transmits an advertising message.

Correspondingly, in this embodiment, the advertising behavior is continuously performed for multiple times according to the time interval.

In this embodiment, the resetting the transmission time parameters of the advertising behavior at a specific time interval includes: the time interval at which two consecutive advertising behaviors are transmitted is regenerated at a specific time interval.

The time interval at which two consecutive advertising behaviors are transmitted is regenerated at a specific time interval, so that in different time periods, a time interval in the sequence of the advertising behaviors no longer has certain periodicity. Consequently, it is difficult for a third-party device to decrypt an advertisement device from the time interval, which helps to improve privacy in transmission of the advertising behaviors.

As an example, the following is a case in which the advertising behavior is applicable to advertising events.

An advertising event usually periodically occurs, i.e., an advertisement device repeatedly transmits an advertising behavior at a certain time interval, so as to be detected and connected or scanned by other devices.

During each advertising event, a BLE device performs an advertising behavior on a specified channel. Typically, an advertising interval is set to a fixed value.

In this embodiment, the regenerating, at a specific time interval, the time interval at which two consecutive advertising behaviors are performed includes: the advertising interval is regenerated at a specific time interval.

The advertising interval is regenerated at a specific time interval, then the advertising interval set in a specific time is a fixed value, and the advertising interval set in the next specific time is another fixed value, so that in different time periods, the advertising intervals no longer have certain periodicity, i.e., the time interval no longer has certain periodicity.

In this embodiment, the setting the time interval at which two consecutive advertising behaviors are performed further includes: a delay interval (advDelay) is configured at the end of the advertising interval.

The delay interval is used for introducing a time delay between two consecutive advertising events, to combat interference and ensure that the advertising events can be performed more stably when surrounding channels have relatively strong interference.

Specifically, in this embodiment, the time interval between two consecutive advertising events is determined by both the advertising interval and the delay interval, i.e., T_advEvent = (advInterval + advDelay).

In this embodiment, in step of performing an advertising behavior for multiple times, the delay intervals between consecutive advertising events are all randomly generated.

The delay interval is a pseudo-random number generated by the link layer (LL). When an advertisement device prepares to initiate the next advertising event, the advertisement device waits for a random time specified by the delay interval, which helps to reduce the probability that different advertisement devices using the same channel in the same time cause conflict of air interface packets.

In this embodiment, the transmission time parameters of the advertising behavior are reset at a specific time interval in the same advertising event sequence.

In the same advertising event sequence, the transmission time parameters typically have certain periodicity. Therefore, in the same advertising event sequence, the transmission time parameters of the advertising behavior are reset at a specific time interval, which breaks periodicity of the transmission time of the advertising behavior. Consequently, it is difficult for a third-party device to decrypt an advertisement device from the transmission time, which helps to improve privacy in transmission of advertising packets.

As another example, the following is a case in which the advertising behavior is applicable to periodic advertising events.

A periodic advertising event is used to perform an advertising behavior at a fixed time interval, and an advertising packet typically includes periodic data, such as sensor readings and status updates, to be received and processed by other devices.

In this embodiment, the setting the time interval at which two consecutive advertising behaviors are performed includes: a periodic advertising interval is set.

The periodic advertising interval is fixed in a set period of time.

In this embodiment, the regenerating, at a specific time interval, the time interval at which two consecutive advertising behaviors are performed includes: a periodic advertising interval is regenerated at a specific time interval.

The periodic advertising interval is regenerated at a specific time interval, which breaks periodicity of the periodic advertising intervals. Consequently, it is difficult for a third-party device to decrypt an advertisement device from the periodic advertising interval, which helps to improve privacy in transmission of advertising packets.

The following describes a second embodiment of resetting the transmission-related parameters of the advertising behavior in detail.

In this embodiment, the performing the advertising behavior for multiple times further includes: an advertising starting time point of multiple advertising behaviors is set.

The advertising starting time point of the multiple advertising behaviors is a transmission starting time of the multiple advertising behaviors.

Correspondingly, in this embodiment, the multiple advertising behaviors start to be transmitted at the advertising starting time point.

In this embodiment, the resetting the transmission time parameters of the advertising behavior at a specific time interval includes: the advertising starting time point is regenerated at a specific time interval.

The advertising starting time point is regenerated at a specific time interval, which breaks periodicity of the multiple advertising behaviors. A time interval between an advertising behavior starting to be transmitted at a regenerated advertising starting time point and the previous advertising behavior does not follow a rule followed by the time interval of the previous multiple advertising behaviors. Therefore, in different time periods, the time intervals between consecutive advertising behaviors no longer have certain periodicity. Consequently, it is difficult for a third-party device to decrypt an advertisement device from the time interval, which helps to improve privacy in transmission of advertising packets.

In this embodiment, the advertising behavior is applicable to advertising events, and the advertising behavior may also be applicable to periodic advertising events.

As an example, the following is a case in which the advertising behavior is applicable to advertising events.

In this embodiment, the setting the advertising starting time point of multiple advertising behaviors includes: an advertising event starting time point of multiple advertising events is set.

In this embodiment, the regenerating the advertising starting time point at a specific time interval includes: an advertising event starting time point is regenerated at a specific time interval.

As another example, the following is a case in which the advertising behavior is applicable to periodic advertising events.

In this embodiment, the setting the advertising starting time point of multiple advertising behaviors includes: a periodic advertising event starting time point of multiple periodic advertising events is set.

In this embodiment, the regenerating the advertising starting time point at a specific time interval includes: a periodic advertising event starting time point is regenerated at a specific time interval.

The periodic advertising event starting time point is regenerated at a specific time interval, which breaks the rule of a fixed periodic advertising interval. In this way, in different time periods, the periodic advertising intervals no longer have certain periodicity. Consequently, it is difficult for a third-party device to decrypt an advertisement device from the periodic advertising interval, which helps to improve privacy in transmission of advertising packets.

The following describes a third embodiment of resetting the transmission-related parameters of the advertising behavior in detail.

In this embodiment, before performing the advertising behavior each time, the step of performing an advertising behavior for multiple times further includes: a channel used by the advertising behavior is selected.

A channel is an information channel for advertising and transmitting information, and each advertising behavior may select a corresponding channel for information transmission.

As an example, in this embodiment, the advertising behavior is applicable to periodic advertising events; and a channel used by the advertising behavior is selected by using a channel selection Algorithm#2.

In this embodiment, before the transmitting one or continuously transmitting multiple advertising behaviors in a specific time, the method further includes: a used channel list is generated.

A used channel list is a set of available channels, from which a used channel is selected by the advertising behavior, to avoid channel conflict and interference.

In this embodiment, the selecting a channel used by the advertising behavior includes: an advertising behavior counter is obtained, where the advertising behavior counters of multiple consecutive advertising behaviors increase progressively.

An advertising behavior counter represents counting of an advertising behavior, and the advertising behavior counters of multiple consecutive advertising behaviors increase progressively, so that the multiple advertising behaviors select different channels.

In this embodiment, a channel is selected according to the advertising behavior counter.

Specifically, in this embodiment, in the step of selecting a channel used by the advertising behavior, a channel is selected from a used channel list.

In this embodiment, the updating the transmission-related parameters of the advertising behavior at a specific time interval includes: channel selection parameters of the advertising behavior are reset at a specific time interval.

The channel selection parameters of the advertising behavior are reset at a specific time interval, which breaks the rule of channel selection of multiple consecutive advertising behaviors. Consequently, it is difficult for a third-party device to decrypt an advertisement device by tracking a channel, which helps to improve privacy in transmission of advertising packets.

In this embodiment, the channel selection parameters include one or more of an advertising behavior counter and a used channel list.

In this embodiment, the resetting the channel selection parameters of the advertising behavior at a specific time interval includes: an advertising behavior counter is regenerated at a specific time interval.

The advertising behavior counter is regenerated at a specific time interval, which breaks the rule under which the advertising behavior counters of multiple consecutive advertising behaviors increase progressively, and further breaks the rule of channel selection of the multiple consecutive advertising behaviors. Consequently, it is difficult for a third-party device to decrypt an advertisement device by tracking a channel, which helps to improve privacy in transmission of advertising packets.

Specifically, in this embodiment, the obtaining the advertising behavior counter includes: an advertising behavior counter of the previous advertising behavior plus 1 is obtained, and used as the advertising behavior counter of the current advertising behavior, where in a specific time, the advertising behavior counter of the first advertising behavior is a specified initial value.

The advertising behavior counter of the first advertising behavior is set as the specified initial value, and in each subsequent advertising behavior, the advertising behavior counter of the previous advertising behavior plus 1 is obtained and used as the advertising behavior counter of the current advertising behavior, to obtain advertising behavior counters that increase progressively.

Correspondingly, in this embodiment, the regenerating the advertising behavior counter at a specific time interval includes: the specified initial value is regenerated at a specific time interval.

The specified initial value is regenerated at a specific time interval, which breaks the rule under which the advertising behavior counters of multiple consecutive advertising behaviors increase progressively, and further breaks the rule of channel selection of the multiple consecutive advertising behaviors. Consequently, it is difficult for a third-party device to decrypt an advertisement device by tracking a channel, which helps to improve privacy in transmission of advertising packets.

Specifically, in this embodiment, the specified initial value is randomly regenerated at a specific time interval.

The following describes a fourth embodiment of resetting the transmission-related parameters of the advertising behavior in detail.

In this embodiment, the resetting the channel selection parameters of the advertising behavior at a specific time interval includes: a used channel list is regenerated at a specific time interval.

A channel is selected from the used channel list, and then the used channel list is regenerated, i.e., a channel is selected from different used channel lists, which breaks the rule of channel selection of multiple consecutive advertising behaviors. Consequently, it is difficult for a third-party device to decrypt an advertisement device by tracking a channel, which helps to improve privacy in transmission of advertising packets.

The following describes a fifth embodiment of resetting the transmission-related parameters of the advertising behavior in detail.

In this embodiment, in the step of continuously transmitting multiple advertising behaviors, progressively increasing sequence numbers (SN) are sequentially configured for advertising packets according to a transmission sequence.

A sequence number is used for identifying the sequence of an advertising packet transmitted. During data transmission of the BLE, each advertising packet is assigned a unique sequence number, to ensure that a receiving party can recombine these advertising packets in a correct sequence.

Referring to the figures, in this embodiment, an advertising packet is in the format of a BLE high data throughput (BLE HDT) packet.

A BLE HDT packet sequentially includes a preamble, a control field, a PDU header field, and a payload field.

In this embodiment, a sequence number is configured in a PDU header field of an advertising packet.

In this embodiment, the sequentially configuring progressively increasing sequence numbers for the advertising packets according to a transmission sequence includes: the sequence number of the previous advertising packet plus an interval value is obtained and used as the sequence number of the current advertising packet.

The sequence number of the previous advertising packet plus an interval value is obtained and used as the sequence number of the current advertising packet, to represent the sequence of multiple advertising packets.

In this embodiment, the resetting the transmission-related parameters of the advertising packets at a specific time interval includes: the sequence numbers are reset at a specific time interval.

The sequence numbers are reset at a specific time interval, which breaks the rule of progressive increasing of the sequence numbers of multiple advertising packets. Consequently, it is difficult for a third-party device to decrypt an advertisement device via the sequence number, which helps to improve privacy in transmission of the advertising packets.

In this embodiment, the resetting the sequence numbers at a specific time includes: the sequence numbers are regenerated at a specific time interval.

The sequence number being regenerated at a specific time interval means that, at a specific time interval, the sequence number of an advertising packet to be transmitted is not obtained by adding an interval value to the sequence number of the previous advertising packet, but a new sequence number is generated.

The sequence numbers are regenerated at a specific time interval, which breaks the rule of progressive increasing of the sequence numbers of multiple advertising packets. Consequently, it is difficult for a third-party device to decrypt an advertisement device via the sequence number, which helps to improve privacy in transmission of the advertising packets.

In this embodiment, the sequence numbers are randomly regenerated at a specific time interval.

As an example, in this embodiment, the interval value is 1.

The following describes a sixth embodiment of resetting the transmission-related parameters of the advertising behavior in detail.

In this embodiment, the resetting the sequence numbers at a specific time includes: the interval value is regenerated at a specific time interval.

The interval value is regenerated at a specific time interval, which breaks the rule of progressive increasing of the sequence numbers of multiple advertising packets. Consequently, it is difficult for a third-party device to decrypt an advertisement device via the sequence number, which helps to improve privacy in transmission of the advertising packets.

In this embodiment, the interval value is regenerated randomly at a specific time interval.

It should be noted that, during advertising, the foregoing six embodiments may be independently used for privacy protection, or any multiple embodiments may be combined with each other for privacy protection.

In this embodiment, the advertising behavior is performed for multiple times, where in the step of resetting the transmission-related parameters of the advertising behavior at a specific time interval, the specific time is a fixed time or a random time.

Specifically, a time maintenance mechanism is set in the advertisement device. The time maintenance mechanism may generate a fixed time and/or a random time as a time interval. Any one or more of the foregoing six embodiments may be triggered at the time interval. In addition, the time maintenance mechanism may use the same time maintenance mechanism as the foregoing resolvable private address.

An embodiment of the present disclosure further provides a device. The device may implement the advertising packet transmission method according to the embodiments of the present disclosure by loading the above advertising packet transmission method in the form of a program. An optional hardware structure of a terminal device according to the embodiment of the present disclosure may be shown in FIG. 12, and includes: at least one processor 01, at least one communication interface 02, at least one memory 03, and at least one communication bus 04.

In this embodiment, at least one processor 01, at least one communication interface 02, at least one memory 03, and at least one communication bus 04 are provided, and the processor 01, the communication interface 02, and the memory 03 communicate with each other by the communication bus 04. The communication interface 02 may be an interface of a communication circuit configured to perform network communication, for example, an interface of a GSM circuit. The processor 01 may be a central processing unit CPU, an application specific integrated circuit (ASIC), or one or more integrated circuits configured to implement the embodiments of the present disclosure. The memory 03 may include a highspeed RAM, as well as a non-volatile memory (NVM), for example, at least one disk storage. The memory 03 has one or more computer instructions stored therein, and the one or more computer instructions are executed by the processor 01 to implement the advertising packet transmission method according to the embodiments of the present disclosure.

It should be noted that, the above implementation terminal device may further include other components (not shown) that may not be necessary for the content disclosed in the embodiments of the present disclosure. These other components may not be necessary for understanding the content disclosed in the embodiments of the present disclosure, and are not introduced one by one in the embodiments of the present disclosure.

An embodiment of the present disclosure further provides a storage medium. The storage medium has one or more computer instructions stored therein, and the one or more computer instructions are used for implementing the advertising packet transmission method according to the embodiments of the present disclosure.

An embodiment of the present disclosure further provides a computer program product, including a computer program/instruction. The computer program/instruction implements the advertising packet transmission method according to the embodiments of the present disclosure when executed by a processor.

In the advertising packet transmission method according to the embodiments of the present disclosure, the transmission-related parameters of the advertising behavior are reset at a specific time interval, which helps to break the rule under which the advertising behavior is performed for multiple times, and correspondingly break the rule under which multiple advertising packets are transmitted, thereby helping to reduce the probability of the advertising packets being tracked by a third-party device during transmission, and further helping to improve privacy in transmission of the advertising packets.

The above implementations of the present disclosure are combinations of elements and features of the present disclosure. Unless otherwise specified, the elements or features may be considered optional. Each element or feature may be implemented without being combined with another element or feature. In addition, the implementations of the present disclosure may be configured by combining a part of the elements and/or features. The order of operations described in the implementations of the present disclosure may be rearranged. Some configurations of any implementation may be included in another implementation and may be replaced with corresponding configurations of the other implementation. It is apparent to those skilled in the art that the claims that do not have a clear reference relationship with each other in the attached claims may be combined into implementations of the present disclosure, or may be included as new claims in amendments after the present application is filed.

The implementations of the present disclosure may be carried out by various means such as hardware, firmware, software, or a combination thereof. In hardware configuration, the method according to the exemplary implementations of the present disclosure may be implemented by one or more application specific integrated circuits (ASICs), digital signal processors (DSPs), digital signal processing devices (DSPDs), programmable logic devices (PLD), field programmable gate arrays (FPGAs), processors, controllers, microcontrollers, microprocessors, and the like. In firmware or software configuration, the implementations of the present disclosure may be carried out in the form of circuits, processes, functions, and the like. Software code may be stored in a memory component and executed by a processor. The memory component is arranged inside or outside the processor and may transmit data to and receive data from the processor by various known means.

An embodiment of the present disclosure further provides a computer program product, including a computer program/instruction. The computer program/instruction implements the advertising packet transmission method according to the embodiments of the present disclosure when executed by a processor.

The above descriptions of the disclosed embodiments enable those skilled in the art to implement or use the present disclosure. Various modifications to these embodiments would be apparent to those skilled in the art, and the general principles defined herein may be implemented in other embodiments without departing from the spirit or scope of the present disclosure. Therefore, the present disclosure is not limited to these embodiments illustrated herein, but conforms to the broadest scope consistent with the principles and novel features disclosed in the present disclosure.

Although the present disclosure is disclosed above, the present disclosure is not limited thereto. Any person skilled in the art may make various changes and modifications without departing from the spirit and scope of the present disclosure. Therefore, the scope of protection of the present disclosure should be based on the scope defined by the claims.

## Claims

1. An advertising packet transmission method, comprising:
performing an advertising behavior for a plurality of times, the advertising behavior being used for transmitting advertising packets, wherein transmission-related parameters of the advertising behavior are reset at a specific time interval.

2. The advertising packet transmission method according to claim 1, wherein the resetting transmission-related parameters of the advertising behavior at a specific time interval comprises: resetting one or more of transmission time parameters, channel selection parameters, and sequence numbers of the advertising packets of the advertising behavior at a specific time interval.

3. The advertising packet transmission method according to claim 2, wherein the transmission time parameters comprise one or more of a time interval of the advertising behavior and an advertising starting time point.

4. The advertising packet transmission method according to claims 2 or 3, wherein the channel selection parameters comprise one or more of an advertising behavior counter and a used channel list.

5. The advertising packet transmission method according to any one of claims 2 to 4, wherein the advertising packets are in the format of a Bluetooth low energy high data throughput packet; and
the sequence numbers are configured at protocol data unit header fields of the advertising packets.

6. The advertising packet transmission method according to one of the previous claims, wherein the step of performing an advertising behavior for a plurality of times further comprises: regenerating a resolvable private address of the advertising packet transmission method at a preset time interval; and
using the preset time as the specific time, or separately setting the preset time and the specific time.

7. The advertising packet transmission method according to one of the previous claims, wherein the specific time is a fixed time or a random time.

8. An advertising packet transmission system, comprising:
an advertising packet transmission circuit, configured to perform an advertising behavior for a plurality of times, the advertising behavior being used for transmitting advertising packets, and the advertising packet transmission circuit comprising a transmission-related parameter updating component, configured to reset transmission-related parameters of the advertising behavior at a specific time interval.

9. The advertising packet transmission system according to claim 8, wherein the transmission-related parameter updating component is configured to reset one or more of transmission time parameters, channel selection parameters, and sequence numbers of the advertising packets of the advertising behavior at a specific time interval.

10. The advertising packet transmission system according to claim 9, wherein the transmission time parameters comprise one or more of a time interval of the advertising behavior and an advertising starting time point.

11. The advertising packet transmission system according to claims 9 or 10, wherein the channel selection parameters comprise one or more of an advertising behavior counter and a used channel list.

12. The advertising packet transmission system according to any one of claims 9 to 11, wherein the advertising packets are in the format of a Bluetooth low energy high data throughput packet; and
the sequence numbers are configured at protocol data unit header fields of the advertising packets.

13. A device, comprising at least one memory and at least one processor, the memory having one or more computer instructions stored therein, and the one or more computer instructions being executed by the processor to implement the advertising packet transmission method according to any one of claims 1 to 7.

14. A storage medium, having one or more computer instructions stored therein, the one or more computer instructions being used for implementing the advertising packet transmission method according to any one of claims 1 to 7.

15. A computer program product, comprising a computer program/instruction, the computer program/instruction implementing the advertising packet transmission method according to any one of claims 1 to 7 when executed by a processor.
